# EUROPEAN PATENT SPECIFICATION

(11) **EP 0 595 168 B1**
(45) Date of publication and mention of the grant of the patent: **08.01.1997**
(21) Application number: 93116899.1
(22) Date of filing: 19.10.1993
(51) Int. Cl.: B25J 15/02

(54) **Robot hand with dimension measuring tool**
Roboterhand mit Messeinrichtung
Pince de robot équipée d'un outil de mesure

(30) Priority: 27.10.1992 JP 288835/92
(43) Date of publication of application: 04.05.1994
(73) Proprietor: SONY MAGNESCALE INCORPORATION, Shiganaga-ku Tokyo (JP)
(72) Inventor: Takita, Hideo, Fujisawa City, Kanagawa Prefecture (JP)
(74) Representative: Grünecker, Kinkeldey, Stockmair & Schwanhäusser Anwaltssozietät

(56) References cited:
- EP-A- 0 368 777
- EP-A- 0 441 060
- DE-A- 3 513 648
- DE-A- 3 611 312
- DE-A- 3 736 148
- FR-A- 2 680 128
- GB-A- 2 229 990
- US-A- 4 629 237
- US-A- 4 705 313

## Description

The invention relates to a robot hand according to the preamble part of claim 1. Such robot hands usually used in assembling lines or the like are equipped with a dimension measuring tool.

It is difficult to precisely measure the dimension of a work piece held by the robot hand with the dimension measuring tool integrated into the robot hand. Particularly, when the work piece has many surfaces the measurement of the dimension of the work piece becomes troublesome, because the measurement must be carried out at the intermediate stable position each time machining of one surface of the work piece is finished.

A robot hand or gripping device for handling components as known from GB-A-2 229 990 includes a contactless type displacement detecting and measuring device within the motion converting part. The device consists of a glass scale and a displacement pick up head. In addition there is provided a measured value pick-up head monitoring the position of the piston rod coming in order to establish an actual measurement of the work piece.

A pneumatically driven plier as known from EP-A1-03 68 777 (closest prior art) is equipped with hall-elements for detecting the position of a magnetic coil provided in the piston driving the motion converting part.

A chuck for a robot as known from US-A-46 29 237 contains a pair of essentially triangularly shaped plates in the motion converting part. Each of the plates is swivably secured to the piston housing. One apex of the triangle engages into a notch of the piston. Another apex of the plate engages behind a cross pin of the parallel guided gripper fingers. A return spring between the gripper fingers serves to spread the gripper fingers apart.

A pneumatically driven parallel-gripping device as known from DE-A-37 36 148 contains in the motion converting part inductive proximity detectors responding to the motions of the gripper fingers in order to generate signals representing an open position, a closed position or an intermediate position of the gripper fingers.

In a gripping device as known from US-A-47 05 313 the gripper fingers are driven by a cam/cam follower device in the motion converting part. The cam has the shape of a triangular wedge which is linearly moved by means of a piston.

A robot as known from DE-A-36 11 312 contains a spindle-drive mechanism for moving the gripper fingers parallel to each other. For contactlessley measuring the dimension of a work piece held by the gripper fingers a permanent magnet is secured to one gripper finger and a linear Hall-sensor is secured to the other gripper finger.

In a hydraulically driven gripping device as known from DE-A-35 13 648 the motion converting part includes a rack and pinion drive. For a stepless position measuring a contactlesly operating long distance-transducer is provided which penetrates into a hollow piston or into a piston rod. The long distance-transducer operates with a eddy-current-principle.

It is a task of the invention to create a robot hand as disclosed having the displacement measuring device in a protected region of the robot hand and a displacement measuring device capable to precisely detect the distance between the gripper fingers and also their moving direction.

Said task can be achieved with the feature combination of claim 1.

The position of the displacement detecting device distant from the gripper fingers and the motion converting part assures a protected operation. Both output signals issued under relative movement of the magnetic scale and the magnetic detecting head with a phase-difference allow to derive the direction in which the piston rod moves at a distance by which the piston rod moves relative to the elongate opening or the case. Because the displacement of the piston rod and the displacement of each gripper finger have a certain relationship, the distance between the gripper fingers can be derived from the output signals of the magnetic detecting device.

Preferred embodiments are contained in the depending claims.

Embodiments of the robot hand will be explained in conjunction with the drawings, in which:
Fig. 1 is a plan view of a robot hand with a dimension measuring tool, which is a first embodiment of the present invention;
Fig. 2 is a view similar to Fig. 1, but showing the dimension measuring tool in a different position;
Fig. 3 is a perspective view of a magnetic type position detecting device which is used in the present invention;
Figs. 4A and 4B show two types of output signals outputted from a magnetic detecting head of the magnetic type position detecting device;
Fig. 5 is a plan view of a robot hand with a dimension measuring tool, which is a second embodiment of the present invention; and
Fig. 6 is a view similar to Fig. 5, but showing the dimension measuring tool in a different position.

### DETAILED DESCRIPTION OF THE INVENTION

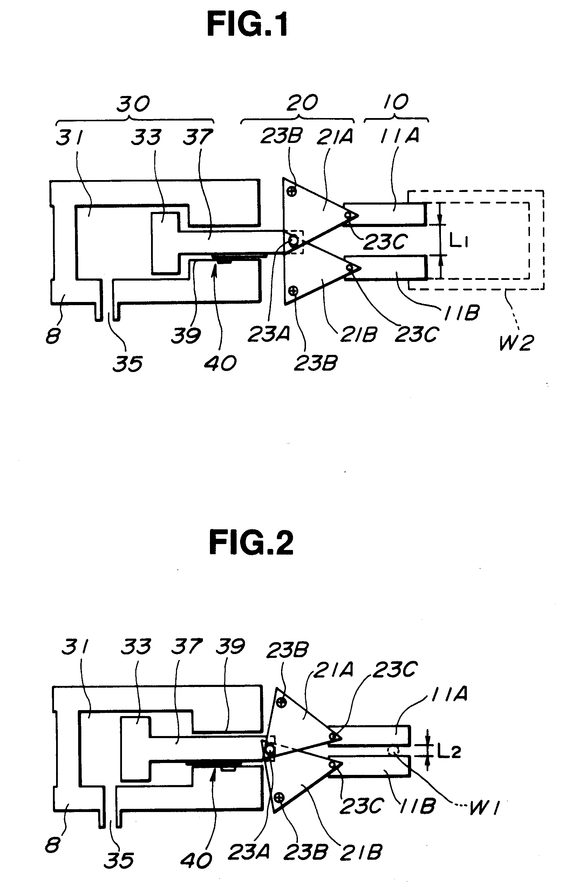

Referring to Figs. 1 and 2, there is shown a robot hand with a dimension measuring tool, which is a first embodiment of the present invention.

As is seen from Fig. 1, the robot hand of the invention comprises generally three parts, which are a pick-up part 10, a movement converting part 20 and a drive part 30. Although not shown in the drawing, the drive part 10 is mounted on an arm structure which can move between predetermined positions.

The drive part 30 comprises a case 8 in which a cylindrical bore 31 is defined. Within the cylindrical bore 31, there is operatively disposed a piston 33. Although not well shown in the drawing, a cylindrical outer surface of the piston 33 is sealingly and slidably engaged with a cylindrical inner surface of the bore 33. The case 8 is formed with an air inlet/outlet port 35 which is exposed to the cylindrical bore 31. Although not shown in the drawings, a duct is connected to the port 35 to supply or discharge a pressurized air to or from the cylindrical bore 31. That is, when the pressurized air is fed to the cylindrical bore 31, the piston 33 is moved forward, that is, rightward in the drawing, while, when the air is discharged from the cylindrical bore 31, the piston 33 is moved rearward, that is, leftward in the drawing. The piston 33 has a piston rod 37 which extends outward through an elongate opening 39 formed in the case 8. Although not shown in the drawings, a known sealing means is attached to the opening 39 to achieve a seal between the piston rod 37 and the opening 39.

The pick-up part 10 comprises a pair of fingers 11A and 11B. Due to work of the movement converting part 20 which will be described in detail hereinafter, the two fingers 11A and 11B are movable toward and away from each other keeping their parallel arrangement. That is, the two fingers 11A and 11B can assume both an open position of Fig. 1 wherein the distance between the fingers 11A and 11B is "L1", and a close position of Fig. 2 wherein the distance between the fingers 11A and 11B is "L2". Thus, when the fingers 11A and 11B are brought to the close position with a workpiece W1 (see Fig. 2) put therebetween, they can grip or hold the workpiece W1. While, if the workpiece is of an apertured workpiece W2 (see fig. 1), the fingers 11A and 11B can hold the workpiece W2 by inserting into the bore of the workpiece W2 as shown.

The movement converting part 20 functions to convert the linear motion of the piston rod 37 to the open-and-close motion of the fingers 11A and 11B. The movement converting part 20 comprises a pair of triangular plates 21A and 21B. Each triangular plate 21A or 21B has first, second and third apexes 23A, 23B and 23C. These triangular plates 21A and 21B are pivotally connected at their apexes 23A and 23A to an outside end of the piston rod 37 through a pivot pin (no numeral). The apexes 23B and 23B of the triangular plates 21A and 21B are pivotally connected through respective pivot pins (no numerals) to respective portions of the case 8, and the apexes 23C and 23C of the triangular plates 21A and 21B are pivotally connected through respective pivot pins (no numerals) to respective ends of the fingers 11A and 11B.

Accordingly, when, due to discharging of the pressurized air from the cylindrical bore 31 of the case 8, the piston 33 is moved leftward in Fig. 1, the two triangular plates 21A and 21B are pivoted about the pivot pins of the second apexes 23B and 23B in respective directions to reduce the distance between the third apexes 23C and 23C. Thus, the two fingers 11A and 11B are moved toward each other, that is, toward the close position as shown in Fig. 2. While, when, due to charging of the pressurized air into the cylindrical bore 31 of the case 8, the piston 33 is moved rightward in Fig. 2, the two triangular plates 21A and 21B are pivoted about the respective pivot pins of the second apexes 23B and 23B in respective directions to increase the distance between the third apexes 23C and 23C. Thus, the two fingers 11A and 11B are moved away from each other, that is, toward the open position as shown in Fig. 1. That is, in response to the forward and rearward movement of the piston 33, the two fingers 11A and 11B carry out the open-and-close motion.

Designated by numeral 40 is a non-contact type displacement detecting device which can detect the axial displacement of the piston rod 37. As shown in the drawings, the displacement detecting device 40 is arranged in the elongate opening 39 of the case 8. If desired, the device 40 may be arranged in the cylindrical bore 31 of the case 8 in a manner to detect the axial displacement of the piston 33.

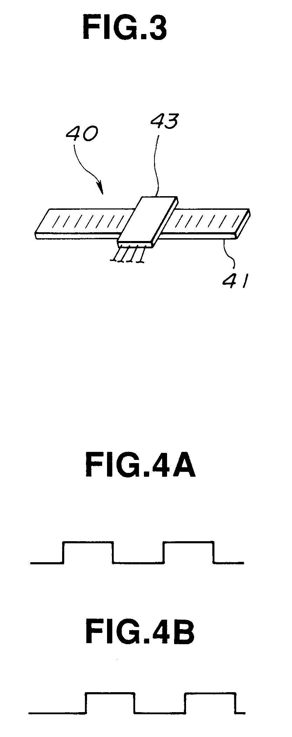

Referring to Fig. 3, there is shown a magnetic type device which is one of the non-contact type displacement detecting device 40. The magnetic type device 40 comprises a magnetic scale 41 which is attached to the piston rod 37 (see Fig. 1) and a magnetic detecting head 43 which is attached to a wall of the elongate opening 39 (see Fig. 1). The head 43 can detect the displacement thereof relative to the magnetic scale 41. The magnetic detecting head 43 includes a known magnetic resistance element (MR element).

Figs. 4A and 4B show two output signals which are issued from the magnetic detecting head 43 under movement of the piston rod 37 (viz., movement of the magnetic scale 41) relative to the elongate opening 39 (viz., the head 43). As shown, these two output signals are different in phase. By analyzing these two output signals, both the direction in which the piston rod 37 moves and the distance by which the piston rod 37 moves relative to the elongate opening 39 are derived.

Because the displacement of the piston rod 37 and that of displacement of each finger 11A or 11B have a certain relationship, the distance between the two fingers 11A and 11B can be derived from the two output signals from the magnetic detecting head 43. If desired, a calculation tip which carries out the calculation for deriving the distance between the fingers 11A and 11B from the output signals of the head 43 may be installed in the displacement detecting device 40.

It is to be noted that the distance between the two fingers 11A and 11B represents the outer dimension of the workpiece W1 (see Fig. 2) which is gripped by the fingers 11A and 11B, or the inner dimension of the apertured workpiece W2 (see Fig. 1).

If desired, the displacement detecting device 40 may include a suitable judging means which can judge whether the measured dimension of the workpiece W1 or apertured member W2 is within a tolerance zone or not. In this case, when the fingers 11A and 11B grip or hold the workpiece W1 or the apertured workpiece W2, a judgment can be instantly carried out as to whether the workpiece W1 or the apertured workpiece W2 is conforming or non-conforming. Thus, the workpiece W1 or the apertured workpiece W2 can be instantly conveyed to a desired position.

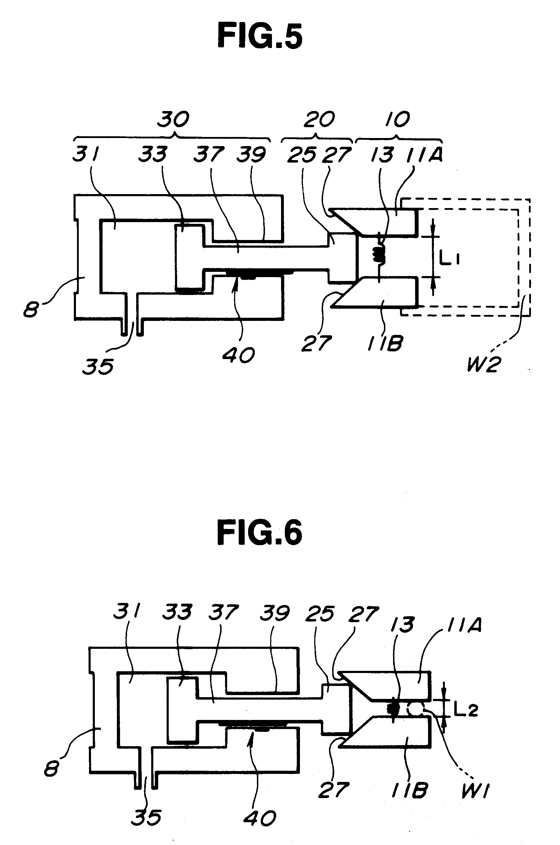

Referring to Figs. 5 and 6, there is shown a second embodiment of the present invention.

The second embodiment is similar in construction to the above-mentioned first embodiment of Figs. 1 and 2. Thus, detailed explanation will be directed to only the different parts which are the pick-up part 10 and the movement converting part 20.

The pick-up part 10 comprises a pair of fingers 11A and 11B which are biased toward each other by a spring 13. Although not shown in the drawings, a guide structure is employed for causing the two fingers 11A and 11B to move toward and away from each other keeping their parallel arrangement. The distance between each finger 11A or 11B and the case 8 is unchanged even when the two fingers 11A and 11B effect the open-and-close motion. For the reason which will be described hereinafter, each finger 11A or 11B has a slanted inside end 27.

The movement converting part 20 comprises an enlarged head portion 25 formed on an outside end of the piston rod 37. As shown, the enlarged head portion 25 has two ridges slidably engaged with the slanted inside ends 27 and 27 of the fingers 11A and 11B. If desired, the head portion 25 may have a circular or trapezoidal cross section.

Accordingly, when, due to discharging of the pressurized air from the cylindrical bore 31 of the case 8, the piston 33 is moved leftward in Fig. 5, the enlarged head portion 25 is moved away from the fingers 11A and 11B while keeping their sliding engagement. Due to the work of the spring 13 and the nature of the engagement between the head portion 25 and the slanted ends 27 of the fingers 11A and 11B, the movement of the head portion 25 induces a movement of the two fingers 11A and 11B toward each other, that is, toward the close position as shown in Fig. 6. While, when, due to discharging of the pressurized air into the cylindrical bore 31 of the case, the piston 33 is moved rightward in Fig. 6, the enlarged head portion 25 is thrusted toward the fingers 11A and 11B while keeping their sliding engagement. Due to the nature of the engagement between head portion 25 and the slanted ends 27 of the fingers 11A and 11B, the movement of the head portion 25 induces a movement of the two fingers 11A and 11B away from each other against the force of the spring 13, that is, toward the open position as shown in Fig. 5. That is, in response to the forward and rearward movement of the piston 33, the two fingers 11A and 11B carry out the open-and-close motion.

Similar to the case of the first embodiment, a magnetic type displacement detecting device 40 is arranged in the elongate opening 39 of the case 8. For the reason which has been described in the first embodiment, the outer dimension of the workpiece W1 (see Fig. 6) or the inner dimension of the apertured workpiece W2 (see Fig. 5) can be derived from the output signals issued from the magnetic detecting head 43.

In the following, modifications of the present invention will be briefly described.

First, if desired, the magnetic scale 41 and the magnetic detecting head 43 may be attached to the inner wall of the elongate opening 39 and the piston rod 37 respectively, which is an arrangement opposite to the above-described arrangement.

Second if desired, the displacement detecting device may be arranged directly between the two fingers 11A and 11B.

Third in place of the above-mentioned pneumatic drive part 30, an electric power device or hydraulic power device may be used.

## Claims

1. A robot hand comprising:
a pick-up part (10) including two fingers (11A, 11B) which are laterally moveable while maintaining their relative parallel arrangement in a manner to hold an article (W1), the fingers being spaced from each other by a certain distance when holding the article;
a drive part (30) including a case (8) in which a cylindrical bore (31) is defined, a piston (33) which is cooperatively disposed in the cylindrical bore and a piston rod (37) which extends outward from the piston, the piston rod being axially moved in a bore (39) of the case (8) when pressurized air is charged to or discharged from the cylindrical bore (31);
a motion converting part (20) for converting the motion of the piston rod (37) into opening and closing motions of the fingers (11A, 11B), and
a contactless type displacement detecting device (40) with a scale (41) and a detecting means, both being linearly moveable in relation to each other in response to the motion of the piston rod,
**characterized in**
that the scale (41) is a magnetic scale which is attached to one of the moveable piston (33) or piston rod (37) and the case (8);
that the detecting means is a magnetic detecting head (43) which is attached to the other part of the moveable piston or piston rod and the case (8); and
that the magnetic detecting head (43) includes a magnetic resistor element (MR) for issuing two output signals under relative movement of the magnetic scale (41) and the magnetic detecting head (43), the two output signals being different in phase for deriving the direction and the distance of the relative movement.

2. Robot hand as in claim 1, **characterized in**
that the motion converting part (20) includes two triangular identical plates (21A, 21B) each having first, second and third apexes (23A, 23B, 23C), pivot pins for pivotally connecting the first apexes (23A) of the two plates to the piston rod (37), pivot pins for pivotally connecting the second apexes (23B) of the two plates to respective portions of the case (8), and pivot pins for pivotally connecting the third apexes (23C) of the two plates to the fingers (11A, 11B) respectively.

3. Robot hand as in claim 1, **characterized in**
that the motion converting part includes slanted ends (27) provided on the fingers (11A, 11B) respectively;
that a spring (13) biases the fingers toward each other;
and that an enlarged head (25) is formed on an end of the piston rod (37), the enlarged head (25) having two ridges slideably engaging with the slanted ends (27) of the fingers (11A, 11B), respectively.

4. A robot hand as in claim 1, **characterized in**
that the fingers (11A, 11B) are guided by a guide structure so as to be movable towards and away from each other keeping their parallel arrangement.

## Patentansprüche

1. Roboter-Hand mit:
einem zwei Finger (11A, 11B) aufweisenden Aufnahmeteil (10), wobei die Finger unter Aufrechterhaltung ihrer relativen parallelen Anordnung auf eine Weise in Querrichtung bewegbar sind, mit der sie ein Werkstück (W1, W2) halten, und wobei die Finger voneinander mit einem bestimmten Abstand beabstandet sind, wenn sie das Werkstück halten;
einem Antriebsteil (30) mit einem Gehäuse (8), in dem eine zylindrische Bohrung (31) definiert ist, einem zur Zusammenarbeit mit der zylindrischen Bohrung (31) in dieser angeordneten Kolben (33) und eine Kolbenstange (37), die sich von dem Kolben nach außen erstreckt, wobei die Kolbenstange in einer Bohrung (39) des Gehäuses (8) axial bewegt wird, wenn der zylindrischen Bohrung (31) Druckluft zugeführt oder aus der zylindrischen Bohrung (31) Druckluft abgelassen wird;
einem eine Bewegung umwandelnden Teil (20) um Umwandeln der Bewegung der Kolbenstange (37) in Öffnungs- und Schließbewegungen der Finger (11A, 11B), und
einer Versetzbewegungs-Detektier-Vorrichtung (40) eines kontaktlosen Typs mit einer Skala (41) und einer Detektiereinrichtung, wobei beide in Relation zueinander und unter Ansprechen auf die Bewegung der Kolbenstange (37) linear bewegbar sind,
**dadurch gekennzeichnet,**
daß die Skala (41) eine magnetische Skala ist, die an dem beweglichen Kolben (33) oder der Kolbenstange (37) oder dem Gehäuse (8) befestigt ist;
daß die Detektiereinrichtung einen magnetischen Detektier-Kopf (43) aufweist, der an dem jeweils anderen Teil, d.h. dem beweglichen Kolben oder der Kolbenstange oder dem Gehäuse (8) angebracht ist, und
daß der magnetische Detektier-Kopf (43) ein magnetisches Widerstandselement (MR) zum Abgeben zweier Ausgangssignale bei der relativen Bewegung zwischen der magnetischen Skala (41) und dem magnetischen Detektier-Kopf (43) umfaßt, wobei die beiden Ausgangssignale zum Ableiten der Richtung und der Distanz der relativen Bewegung phasenverschieden sind.

2. Roboter-Hand nach Anspruch 1, **dadurch gekennzeichnet,**
daß der die Bewegung umwandelnde Teil (20) zwei dreieckige, identische Platten (21A, 21B) aufweist, von denen jede erste, zweite und dritte Dreiecksspitzen (23A, 23B, 23C), Schwenkzapfen zum schwenkbaren Verbinden der ersten Dreiecksspitzen (23A) der beiden Platten mit der Kolbenstange (37), Schwenkzapfen zum schwenkbaren Verbinden der zweiten Dreiecksspitzen (23B) der beiden Platten mit entsprechenden Bereichen des Gehäuses (8), und Schwenkzapfen zum schwenkbaren Verbinden der dritten Dreiecksspitzen (23C) der beiden Platten mit den Fingern (11A, 11B) aufweisen.

3. Roboter-Hand nach Anspruch 1, **dadurch gekennzeichnet,**
daß der die Bewegung umwandelnde Teil (20) an den Fingern (11A, 11B) abgeschrägte Enden (27) aufweist;
daß die Finger (11A, 11B) durch eine Feder (13) zueinander vorgespannt sind;
und daß an einem Ende der Kolbenstange (37) ein vergrößerter Kopf (25) geformt ist, der zwei gleitend an den abgeschrägten Enden (27) der Finger (11A, 11B) angreifende Kantenbereiche besitzt.

4. Roboter-Hand nach Anspruch 1, **dadurch gekennzeichnet,**
daß die Finger (11A, 11B) mittels einer Führungsstruktur geführt sind, derart, daß sie aufeinander zu und voneinander weg unter Einhalten ihrer relativen parallelen Anordnung bewegbar sind.

## Revendications

1. Pince de robot comprenant :
une partie de préhension (10) comprenant deux doigts (11A, 11B) qui sont latéralement mobiles tout en maintenant leur agencement relatif parallèle, de manière à tenir un article (W1), les doigts étant espacés l'un de l'autre d'une certaine distance lorsqu'ils tiennent l'article ;
une partie motrice (30) comprenant un boîtier (8) dans lequel un alésage cylindrique (31) est défini, un piston (33) qui est disposé coopérant dans l'alésage cylindrique et une tige de piston (37) qui s'étend vers l'extérieur à partir du piston, la tige de piston étant déplacée axialement dans un alésage (39) du boîtier (8) lorsque de l'air sous pression est chargé dans l'alésage cylindrique (31) ou déchargé de celui-ci ;
une partie de transformation de mouvement (20) pour transformer le mouvement de la tige de piston (37) en des mouvements d'ouverture et de fermeture des doigts (11A, 11B), et
un dispositif détecteur de mouvement du type sans contact (40) avec une échelle (41) et un moyen détecteur, les deux étant linéairement mobiles l'un par rapport à l'autre en réponse au mouvement de la tige de piston,
**caractérisée en ce que**
l'échelle (41) est une échelle magnétique qui est attachée à l'un du piston mobile (33) ou tige de piston (37) et du boîtier (8) ;
en ce que le moyen détecteur est une tête magnétique de détection (43) qui est attachée à l'autre partie du piston mobile ou tige de piston et du boîtier (8) ; et
en ce que la tête magnétique de détection (43) comprend un élément rhéostat magnétique (MR) pour délivrer deux signaux de sortie lors du mouvement relatif de l'échelle magnétique (41) et de la tête magnétique de détection (43), les deux signaux de sortie étant différents en phase, pour en déduire la direction et la distance du mouvement relatif.

2. Pince de robot selon la revendication 1, **caractérisée en ce que**
la partie de transformation de mouvement (20) comprend deux plaques triangulaires identiques (21A, 21B) ayant chacune des premier, second et troisième sommets (23A, 23B, 23C), des axes d'articulation pour connecter de manière pivotante les premiers sommets (23A) des deux plaques à la tige de piston (37), des axes d'articulation pour connecter de manière rotative les seconds sommets (23B) des deux plaques aux portions respectives du boîtier (8), et des axes de pivotement pour connecter de manière rotative les troisièmes sommets (23C) des deux plaques aux doigts (11A, 11B) respectivement.

3. Pince de robot selon la revendication 1, **caractérisée en ce que**
la partie de transformation de mouvement comprend des extrémités inclinées (27) prévues sur les doigts (11A, 11B) respectivement ;
en ce qu'un ressort (13) sollicite les doigts l'un vers l'autre ;
et en ce qu'une tête élargie (25) est formée sur une extrémité de la tige de piston (37), la tête élargie (25) ayant deux bords en contact coulissant avec les extrémités inclinées (27) des doigts (11A, 11B) respectivement.

4. Pince de robot selon la revendication 1, **caractérisée en ce que**
les doigts (11A, 11B) sont guidés par une structure de guidage de manière à être mobiles l'un vers l'autre et à distance l'un de l'autre tout en maintenant leur disposition parallèle.
